# EUROPEAN PATENT APPLICATION

(11) **EP 4 209 695 A1**
(43) Date of publication of application: **12.07.2023**
(21) Application number: 21902294.4
(22) Date of filing: 05.11.2021
(51) Int. Cl.: F16K 1/00, F16K 1/46, F16K 1/42, F16K 1/36, F16K 27/02

(54) **VALVE NEEDLE ASSEMBLY, AND ELECTRONIC EXPANSION VALVE HAVING SAME**

(30) Priority: 11.12.2020 CN 202011446606
(71) Applicant: Zhejiang Dunan Artificial Environment Co., Ltd., Shaoxing, Zhejiang 311835 (CN)
(72) Inventor: ZHAN, Shaojun, Shaoxing, Zhejiang 311835 (CN); LIU, Leqiang, Shaoxing, Zhejiang 311835 (CN); XU, Guanjun, Shaoxing, Zhejiang 311835 (CN)
(74) Representative: HGF
(86) International application number: PCT/CN2021/129092
(87) International publication number: WO 2022/121587

(57) **Abstract**

A valve needle assembly and an electronic expansion valve having same. The valve needle assembly includes: a valve sleeve (10), the valve sleeve (10) having a cavity, and the valve sleeve (10) having a first end and a second end arranged opposite each other; a bushing (20) movably arranged in the cavity, the bushing (20) being in limiting fit with the first end of the valve sleeve (10), and the bushing (20) being used for driving the valve sleeve (10) to move; a spring (30) arranged in the cavity, wherein one end of the spring (30) is connected with the bushing (20), and the other end of the spring (30) is connected with the second end of the valve sleeve (10); and a sealing member (40) fixedly arranged at the second end of the valve sleeve (10), the sealing member (40) being configured for closing a valve port (83).

## Description

The present invention claims priority to a patent application no. 202011446606.X, entitled "Valve Needle Assembly and Electronic Expansion Valve Having Same", and filed to the China National Intellectual Property Administration on 11 December 2020.

### Technical Field

The present invention relates to the technical field of expansion valves, and in particular, to a valve needle assembly and an electronic expansion valve having same.

### Background

At present, in existing electronic expansion valves, valve closure is achieved by driving a valve needle to move up and down in a valve body, and the valve needle and the valve port are both made of metal materials, resulting in a hard seal between the valve needle and the valve port, which has a poor sealing performance, and is prone to leakage.

### Summary

The present invention provides a valve needle assembly and an electronic expansion valve having same, so as to solve the problem of poor sealing performance in the prior art.

According to one aspect of the present invention, a valve needle assembly is provided. The valve needle assembly includes: a valve sleeve, the valve sleeve having a cavity, and the valve sleeve having a first end and a second end arranged opposite each other; a bushing movably arranged in the cavity, the bushing being in limiting fit with the first end of the valve sleeve, and the bushing being used for driving the valve sleeve to move; a spring arranged in the cavity, wherein a first end of the spring is connected with the bushing, and a second end of the spring is connected with the second end of the valve sleeve; and a sealing member fixedly arranged at the second end of the valve sleeve, the sealing member being configured for closing a valve port.

In some embodiments, the valve needle assembly further includes: a fixing member arranged between the valve sleeve and the sealing member, the fixing member being configured for fixing the sealing member to the valve sleeve.

In some embodiments, the fixing member includes: a guide sleeve, wherein a first end of the guide sleeve is located in the cavity, and a second end of the guide sleeve sequentially passes through the second end of the valve sleeve and the sealing member; and a gasket connected to the second end of the guide sleeve.

In some embodiments, the first end of the guide sleeve is provided with a limiting structure, and the limiting structure is in limiting fit with the second end of the valve sleeve, so as to limit a displacement of the guide sleeve relative to the valve sleeve.

In some embodiments, an end of the sealing member away from the valve sleeve is provided with a groove, and the gasket is located in the groove.

In some embodiments, the valve needle assembly further includes: a positioning structure arranged between the second end of the valve sleeve and the sealing member.

In some embodiments, an end face of an end of the sealing member facing the valve sleeve is provided with a first step structure, an end face of the second end of the valve sleeve is provided with a second step structure, and the first step structure cooperates with the second step structure to form the locating structure.

In some embodiments, an outer diameter of the sealing member is the same as an outer diameter of the second end of the valve sleeve.

In some embodiments, the valve needle assembly further includes a sealing cover, wherein the sealing cover is fixedly arranged at the first end of the valve sleeve, and the sealing cover is configured for limiting a displacement of the bushing in the valve sleeve.

According to another aspect of the present invention, an electronic expansion valve is provided. The electronic expansion valve includes: a valve body having a valve port; a screw rod arranged in the valve body; a valve needle assembly, wherein the valve needle assembly is the valve needle assembly provided above, the valve needle assembly is movably arranged in the valve body, the valve needle assembly is arranged corresponding to the valve port, the screw rod is in drive connection with the bushing of the valve needle assembly, and the screw rod drives the valve sleeve to move by the bushing.

By applying the technical solution of the present invention, the valve needle assembly includes a valve sleeve, a bushing, a spring and a sealing member, wherein the valve sleeve is driven to move by the bushing, and the sealing member is fixedly arranged at a second end of the valve sleeve, so as to close the valve port by the sealing member; and since the sealing member has a relatively soft texture, when the valve sleeve moves downwards, the sealing member is squeezed and deformed by the valve sleeve and the valve port, so that the sealing member can closely fit the valve port, thereby improving the overall sealing performance.

### Brief Description of the Drawings

The drawings of the description, constituting a part of the present invention, are used for providing further understanding of the present invention, and the illustrative embodiments of the present invention and illustrations thereof are used to explain the present invention, rather than constitute inappropriate limitation on the present invention. In the drawings:
Fig. 1 shows a schematic structural diagram of a valve needle assembly provided in the present invention;
Fig. 2 shows a schematic structural diagram of a sealing member and a valve sleeve in Fig. 1;
Fig. 3 shows a sectional view of an electronic expansion valve provided in the present invention;
Fig. 4 shows a side view of an electronic expansion valve provided in the present invention.

The described accompanying drawings include the following reference signs:
10. valve sleeve; 20. bushing; 30. spring; 40. sealing member; 41. groove; 51. guide sleeve; 52. gasket; 61. first step structure; 62. second step structure; 70. sealing cover; 81. valve body; 82. Screw rod; 83. valve port.

### Detailed Description of the Embodiments

Hereinafter, the technical solutions in the embodiments of the present invention will be described clearly and thoroughly with reference to the accompanying drawings of the embodiments of the present invention. Obviously, the embodiments as described are only some of the embodiments of the present invention, and are not all of the embodiments of the present invention. The following description of at least one exemplary embodiment is merely illustrative in nature and is in no way intended to limit some embodiments of the present invention and any inventions or uses thereof. All other embodiments obtained by a person of ordinary skill in the art on the basis of the embodiments of the present invention without any inventive effort shall all fall within the scope of protection of some embodiments of the present invention.

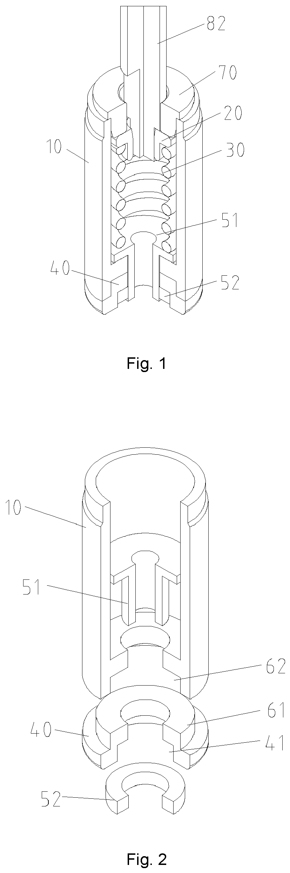

As shown in Figs. 1 and 2, the embodiment of the present invention provides a valve needle assembly. The valve needle assembly includes a valve sleeve 10, a bushing 20, a spring 30 and a sealing member 40. The valve sleeve 10 has a cavity, and the valve sleeve 10 has a first end and a second end arranged opposite each other. The bushing 20 is movably arranged in the cavity, the bushing 20 is in limiting fit with the first end of the valve sleeve 10, the bushing 20 is able to drive the valve sleeve 10 to move, specifically, the valve sleeve 10 is able to be driven to move up and down in the valve body. The spring 30 is provided in the cavity, one end of the spring 30 is connected with the bushing 20, and the other end of the spring 30 is connected with the second end of the valve sleeve 10. By providing the spring 30, the bushing 20 and the valve sleeve 10 are elastically connected, thereby playing the role of cushioning. The sealing member 40 is fixedly arranged at the second end of the valve sleeve 10, and the valve port 83 is closed by the sealing member 40. In some embodiments, the sealing member 40 is made of polytetrafluoroethylene, and in some other embodiments, the sealing member 40 may also be made of other plastic or rubber materials, as long as the requirements of wear resistance and corrosion resistance are met.

By means of the device provided in some embodiments of the present invention, the valve needle assembly includes the valve sleeve 10, the bushing 20, the spring 30 and the sealing member 40, wherein the valve sleeve 10 is driven to move by the bushing 20, and the sealing member 40 is fixedly arranged at the second end of the valve sleeve 10, so as to seal a valve port 83 by the sealing member 40; and since the sealing member 40 has a relatively soft texture, when the valve sleeve 10 moves downwards, the sealing member 40 is squeezed and deformed by the valve sleeve 10 and the valve port 83, and is able to closely fit the valve port 83, thereby improving the overall sealing performance.

In some embodiments, the valve needle assembly further includes a fixing member, the fixing member is arranged between the valve sleeve 10 and the sealing member 40, and the sealing member 40 is fixed to the valve sleeve 10 by the fixing member. The fixing member may be a fastener or other connecting structure. By fixing the sealing member 40 using a fixing member, the sealing member 40 is firmly fixed on the valve sleeve 10, and connection and installation are facilitated.

As shown in Fig. 2, in the present embodiment, the fixing member includes a guide sleeve 51 and a gasket 52. A first end of the guide sleeve 51 is located in the cavity, a second end of the guide sleeve 51 sequentially passes through the second end of the valve sleeve 10 and the sealing member 40, and the gasket 52 is connected with the second end of the guide sleeve 51. The sealing member 40 is fixed to the second end of the valve sleeve 10 by the fitting connection of the gasket 52 and the guide sleeve 51. The guide sleeve 51 is formed by stretching, the gasket 52 is formed by stamping, and the guide sleeve 51 and the gasket 52 are able to be connected by riveting or welding. The structure above is used for connection. The structure is simple, the connection is reliable, and the connection is convenient.

In an embodiment, a through hole is provided in the middle of the sealing member 40, and the second end of the guide sleeve 51 penetrates into the through hole from the second end of the valve sleeve 10 and is fixedly connected with the gasket 52.

The first end of the guide sleeve 51 is provided with a limiting structure, and the limiting structure is in limiting fit with the second end of the valve sleeve 10, so as to limit the displacement of the guide sleeve 51 relative to the valve sleeve 10, so as to prevent the guide sleeve 51 from being detached from the valve sleeve 10. Specifically, in an embodiment, the first end of the guide sleeve 51 may be provided with a limiting boss, so that the limiting boss cooperates with an inner wall of the valve sleeve 10 for limiting. In the present embodiment, the inner wall of the valve sleeve 10 is provided with an annular boss, the inner diameter of the annular boss is greater than the diameter of the main body of the guide sleeve 51, and after the main body of the valve sleeve 10 passes through the annular boss, the limiting boss is abutted against the annular boss for limiting.

In some embodiments, an end of the sealing member 40 away from the valve sleeve 10 is provided with a groove 41, and the gasket 52 is located in the groove 41. By arranging the groove 41, a placement space is provided for the gasket 52, thereby reducing the overall occupied space. Also, a problem that the gasket 52 contacts with the valve port is avoided as much as possible during operation.

In the present embodiment, the valve needle assembly further includes a positioning structure arranged between the second end of the valve housing 10 and the sealing member 40. The arrangement of the positioning structure can facilitate alignment and mounting of the valve sleeve 10 and the sealing member 40, preventing deflection of the sealing member 40, and ensuring that the position of the sealing member 40 is consistent with the position of the valve port, thereby ensuring effective sealing of the sealing member 40 to the valve port.

In some embodiments, an end face of an end of the sealing member 40 facing the valve sleeve 10 is provided with a first step structure 61, an end face of a second end of the valve sleeve 10 is provided with a second step structure 62, and the first step structure and the second step structure cooperate with each other to form a positioning structure. A boss is provided on the end face of a first end of the sealing member 40 facing the valve sleeve 10, to form a first step structure 61, the first step structure 61 is located in the middle of the sealing member 40; correspondingly, a groove is provided on the end face of a second end of the valve sleeve 10, to form a second step structure 62, and the boss and the groove cooperate with and abut against each other, so as to realize centering positioning. The structure above ensures the accuracy of the position of the sealing member 40 while quickly installing the sealing member 40, ensuring the sealing effect of the sealing member 40 to the valve port.

In the present embodiment, the dimension of the outer diameter of the sealing member 40 is set to be the same as that of the second end of the valve sleeve 10, so as to ensure that the sealing member 40 contacts and seals the valve port 83 when the valve sleeve 10 moves to the valve port 83.

Specifically, the valve needle assembly further includes a sealing cover 70. The sealing cover 70 is fixedly arranged at the first end of the valve sleeve 10, and limits the displacement of the bushing 20 in the valve sleeve 10 by means of the sealing cover 70. The sealing cover 70 is provided with a through hole, the screw rod 82 is connected with the bushing 20 through the through hole, and the sealing cover 70 is used for limiting the bushing 20 to be detached from the valve sleeve 10.

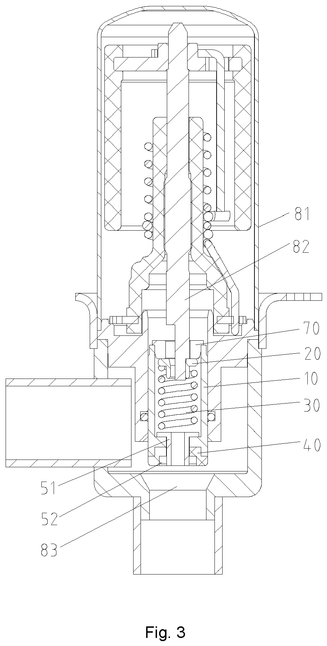

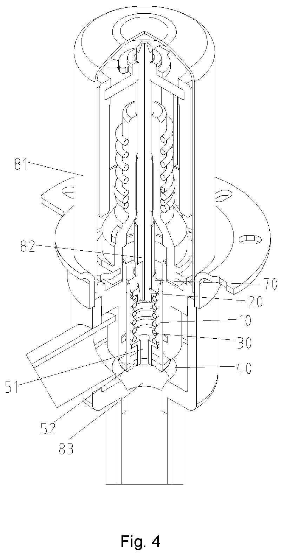

As shown in Figs. 3 and 4, another embodiment of the present invention provides an electronic expansion valve. The electronic expansion valve includes: a valve body 81, a screw rod 82 and a valve needle assembly. The valve body 81 is provided with a valve port 83, the screw rod 82 is arranged in the valve body 81, the valve needle assembly is the valve needle assembly provided above, the valve needle assembly is movably arranged in the valve body 81, the valve needle assembly is arranged corresponding to the valve port 83, the screw rod 82 is in drive connection with the bushing 20 of the valve needle assembly, and the screw rod 82 drives the valve sleeve 10 to move by means of the bushing 20, so as to open and close the valve port.

The content above merely relates to some embodiments of the present invention and is not intended to limit the present invention. For a person skilled in the art, the present invention may have various modifications and variations. Any modifications, equivalent replacements, improvements, etc. made within the spirit and principle of the present invention shall all belong to the scope of protection of the present invention.

## Claims

1. A valve needle assembly, comprising:
a valve sleeve (10), the valve sleeve (10) having a cavity, and the valve sleeve (10) having a first end and a second end arranged opposite each other;
a bushing (20) movably arranged in the cavity, the bushing (20) being in limiting fit with the first end of the valve sleeve (10), and the bushing (20) being configured for driving the valve sleeve (10) to move;
a spring (30) arranged in the cavity, wherein a first end of the spring (30) is connected with the bushing (20), and a second end of the spring (30) is connected with the second end of the valve sleeve (10); and
a sealing member (40) fixedly arranged at the second end of the valve sleeve (10), the sealing member (40) being configured for closing a valve port(83).

2. The valve needle assembly as claimed in claim 1, further comprising:
a fixing member arranged between the valve sleeve (10) and the sealing member (40), the fixing member being configured for fixing the sealing member (40) to the valve sleeve (10).

3. The valve needle assembly as claimed in claim 2, wherein the fixing member comprises:
a guide sleeve (51), wherein a first end of the guide sleeve (51) is located in the cavity, and a second end of the guide sleeve (51) sequentially passes through the second end of the valve sleeve (10) and the sealing member (40); and
a gasket (52) connected with the second end of the guide sleeve (51).

4. The valve needle assembly as claimed in claim 3, wherein the first end of the guide sleeve (51) is provided with a limiting structure, and the limiting structure is in limiting fit with the second end of the valve sleeve (10), so as to limit a displacement of the guide sleeve (51) relative to the valve sleeve (10).

5. The valve needle assembly as claimed in claim 3, wherein an end of the sealing member (40) away from the valve sleeve (10) is provided with a groove (41), and the gasket (52) is located in the groove (41).

6. The valve needle assembly as claimed in claim 1, wherein the valve needle assembly further comprises:
a positioning structure arranged between the second end of the valve sleeve (10) and the sealing member (40).

7. The valve needle assembly as claimed in claim 6, wherein an end face of an end of the sealing member (40) facing the valve sleeve (10) is provided with a first step structure (61), an end face of the second end of the valve sleeve (10) is provided with a second step structure (62), and the first step structure cooperates with the second step structure to form the locating structure.

8. The needle assembly as claimed in claim 1, wherein an outer diameter of the sealing member (40) is the same as an outer diameter of the second end of the valve sleeve (10).

9. The valve needle assembly as claimed in claim 1, further comprising a sealing cover (70), wherein the sealing cover (70) is fixedly arranged at the first end of the valve sleeve (10), and the sealing cover (70) is configured for limiting a displacement of the bushing (20) in the valve sleeve (10).

10. An electronic expansion valve, wherein the electronic expansion valve comprises:
a valve body (81) having a valve port (83);
a screw rod (82) arranged in the valve body (81);
the valve needle assembly as claimed in any one of claims 1 to 9, the valve needle assembly is movably arranged in the valve body (81), the valve needle assembly is arranged corresponding to the valve port (83), the screw rod (82) is in drive connection with the bushing of the valve needle assembly, and the screw rod (82) drives the valve sleeve to move by the bushing.
